# EUROPEAN PATENT APPLICATION

(11) **EP 2 722 100 A2**
(43) Date of publication of application: **23.04.2014**
(21) Application number: 12802905.5
(22) Date of filing: 19.06.2012
(51) Int. Cl.: B01D 69/10, B01D 69/12, B01D 61/02, B01D 71/56, B01D 71/02

(54) **REVERSE OSMOSIS MEMBRANE HAVING SUPERIOR SALT REJECTION AND PERMEATE FLOW, AND METHOD FOR MANUFACTURING SAME**

(30) Priority: 20.06.2011 KR 20110059810; 19.06.2012 KR 20120065694
(71) Applicant: LG Chem, Ltd., Seoul 150-875 (KR)
(72) Inventor: LEE, Phill, Daejeon 305-750 (KR); SHIN, Chong-Kyu, Daejeon 305-358 (KR); YOO, Joung-Eun, Daejeon 302-828 (KR); JEONG, Seung-Pyo, Gwangju-si Gyeonggi-do 464-712 (KR); LEE, Young-Ju, Daegu 702-050 (KR)
(74) Representative: Goddar, Heinz J.
(86) International application number: PCT/KR2012/004843
(87) International publication number: WO 2012/177033

(57) **Abstract**

A reverse osmosis separation membrane includes a minute, porous support, and a polyamide active layer formed on the minute, porous support and including at least one compound containing grapheme is disclosed. A method of manufacturing the reverse osmosis separation membrane is also disclosed.

## Description

### [Technical Field]

The present invention relates to a reverse osmosis separation membrane and a method of manufacturing the same, and more particularly, to a reverse osmosis separation membrane having a high degree of salt rejection and a high permeation flux, and a method of manufacturing the same.

### [Background Art]

The phenomenon of a solvent moving between two isolated solutions through a semi-permeable membrane from a solution including a lower concentration of a solute to another solution, including a higher concentration of a solute, is known as an osmotic phenomenon. In this case, pressure acting on the solution including the higher concentration of the solute due to the movement of the solvent is known as osmotic pressure. When external pressure, having a level higher than the osmotic pressure, is applied, the solvent may move toward the solution including the lower concentration of the solute. This phenomenon is known as reverse osmosis. Various salts and organic materials may be separated by the semi-permeable membrane by using a pressure gradient as a driving force by utilizing the principle of reverse osmosis. A reverse osmosis separation membrane using the reverse osmosis phenomenon may be used for separating molecule scale materials and removing salts from a brine or seawater to supply water available for domestic, commercial and industrial use.

Typical examples of the reverse osmosis separation membrane may include a polyamide reverse osmosis separation membrane. The polyamide reverse osmosis separation membrane may be manufactured by forming a polyamide active layer on a minute, porous support. More particularly, the minute, porous support may be formed by forming a polysulfone layer on a non-woven fabric to form the minute, porous support, forming an m-phenylenediamine (mPD) layer by dipping the minute, porous support into an aqueous mPD solution, and dipping the support into a trimesoyl chloride (TMC) organic solvent to make a contact with the mPD layer and TMC to undertake interfacial polymerization to form a polyamide layer.

In order to use the reverse osmosis separation membrane commercially in order to conduct desalination in large quantities, the level of salt rejection is required to be high and permeation flux properties for passing a large amount of water under a relatively low pressure are required to be good. Accordingly, development of a technique for further increasing the level of salt rejection and the permeation flux properties of the reverse osmosis separation layer have been required.

### [Disclosure]

### [Technical Problem]

An aspect of the present invention provides a reverse osmosis separation layer having a high degree of salt rejection and high permeation flux by including a compound containing graphene in an active layer, and a method of manufacturing the same.

### [Technical Solution]

According to an aspect of the present invention, there is provided a reverse osmosis separation membrane including a minute, porous support, and a polyamide active layer formed on the minute, porous support and including at least one compound containing graphene.

In exemplary embodiments, the minute, porous support may be one selected from the group consisting of polysulfone, polyethersulfone, polycarbonate, polyethylene oxide, polyimide, polyetherimide, polyether ether ketone, polypropylene, polymethylpentene, polymethyl chloride and polyvinylidene fluoride.

In addition, the polyamide active layer may be formed by interfacial polymerization of an amine compound and an acyl halide compound. In this case, the amine compound may be one selected from m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine and mixtures thereof. The acyl halide compound may be at least one selected from the group consisting of trimesoyl chloride, isophthaloyl chloride and terephthaloyl chloride.

According to another embodiment of the present invention, there is provided a method of manufacturing a reverse osmosis separation membrane including coating a minute, porous support with an aqueous amine solution including at least one compound containing graphene, removing an excessive amount of the aqueous amine solution on the support, and contacting an aliphatic hydrocarbon organic solution including an acyl halide with the minute, porous support coated with the aqueous amine solution. In this case, the compound containing graphene may be included in an amount of 0.0005 to 0.05 wt% based on a total amount of the aqueous amine solution.

### [Advantageous Effects]

The reverse osmosis separation membrane including a compound containing graphene in an active layer according to the present invention may have a higher salt rejection and permeation flux property than a common reverse osmosis separation membrane.

### [Best Mode]

Exemplary embodiments of the present invention will now be described in detail.

A reverse osmosis separation membrane according to an example embodiment of the present invention includes a minute, porous support and a polyamide active layer. In the polyamide active layer, a compound containing graphene is included.

Graphene is a material having a continuously arranged structure of hexagonal network type carbon atoms and has a two-dimensional plane shape. The thickness of the graphene is very small and is about 0.2 nm, and the graphene is a material having high physical and chemical stability. In order to improve the degree of salt rejection and the permeation flux of the reverse osmosis separation membrane, the present inventors have undertaken research and found that a reverse osmosis membrane having good salt rejection and a high permeation flux properties would be manufactured by adding a compound containing graphene into the active layer of a reverse osmosis separation membrane.

In exemplary embodiments, the compound containing graphene may be any compound only if containing graphene without limitation. For example, graphene, graphene oxide, etc. may be used. The compound containing graphene may be included in a polyamide layer according to the present invention alone or as a mixture of two or more compounds.

The minute, porous support may be obtained by casting a polymer material on a non-woven fabric. The polymer material may be, for example, polysulfone, polyethersulfone, polycarbonate, polyethylene oxide, polyimide, polyetherimide, polyether ether ketone, polypropylene, polymethylpentene, polymethyl chloride and polyvinylidene fluoride, without limitation. Particularly, polysulfone may preferably be used.

In addition, the polyamide active layer may be formed by interfacial polymerization of an amine compound with an acyl halide compound. In this case, the amine compound may include, for example, m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine and mixtures thereof, without limitation. The acyl halide compound may be, for example, trimesoyl chloride, isophthaloyl chloride, terephthaloyl chloride or mixtures thereof, without limitation.

Hereinafter, a method of manufacturing a reverse osmosis separation membrane will be described.

The method of manufacturing the reverse osmosis separation membrane in exemplary embodiments may include (i) coating a minute, porous support with an aqueous amine solution including at least one compound containing graphene, (ii) removing an excessive amount of the aqueous amine solution on the support, and (iii) contacting an aliphatic hydrocarbon organic solution including an acyl halide with the minute, porous support coated with the aqueous amine solution.

First, a minute, porous support is coated with an aqueous amine solution including at least one compound containing graphene. Since the compound containing graphene is the same as described above, an explanation of this compound will be omitted. In addition, the coating may not be limited to the above described method. For example, the coating may be conducted by dipping the minute, porous support into the aqueous amine solution. The dipping may preferably be conducted, without limitation, for about 1 to 10 minutes.

The minute, porous support may be obtained by casting a polymer material such as polysulfone, polyethersulfone, polycarbonate, polyethylene oxide, polyimide, polyetherimide, polyether ether ketone, polypropylene, polymethylpentene, polymethyl chloride and polyvinylidene fluoride on a non-woven fabric as described above.

In addition, the amine compound may be an aqueous solution including an amine compound such as m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine and mixtures thereof, with graphene and/or graphene oxide.

In this case, the amount of the amine compound in the aqueous amine solution may preferably be about 0.5 to 5 wt%. When the amount of the amine is less than 0.5 wt%, the membrane may be insufficiently formed to deteriorate the salt rejection, and when the amount of the amine exceeds 5 wt%, water permeability may be lowered.

The amount of graphene in the aqueous amine solution may not be limited to the following range, but may preferably be about 0.0005 to 0.05 wt%. When the amount of graphene is in the range, a good salt rejection and permeation flux properties may be obtained.

In the aqueous amine solution, a polar compound assisting the interfacial polymerization of the amine compound with the acyl halide, or an additive, etc. may be additionally included only when the physical properties of the aqueous amine solution is not hindered.

After conducting the coating using the aqueous amine solution, an excessive amount of the aqueous amine solution may be removed from the surface of the support by using a roller, an air knife or a sponge. Then, the support may make a contact with an aliphatic hydrocarbon organic solution including the acyl halide. Through the contact, the amine compound coated on the surface of the support and the acyl halide compound may react to produce polyamide by interfacial polymerization. The polyamide may be absorbed onto the minute, porous support to form a thin film.

In this case, the aliphatic hydrocarbon organic solution may include the acyl halide such as trimesoyl chloride, isophthaloyl chloride, terephthaloyl chloride, etc. by an amount of about 0.05 to 1 wt%. When the amount of the acyl halide compound is in the range, a good salt rejection and permeation flux properties may be obtained.

Any organic solvents not participating in the interfacial polymerization reaction, not making a chemical bond with the acyl halide compound, and doing no harm to the porous support may preferably be used. For example, IsoPar (Exxon), ISOL-C (SK Chem), ISOL-G (SK Chem), etc. may be used without limitation.

After forming the polyamide thin film on the minute, porous support through the above-described method, drying and washing processes may be conducted. In this case, the drying may preferably be conducted at about 45°C to 80°C for about 1 to 10 minutes. The washing may be conducted by any methods without limitation. For example, the washing may be conducted in an aqueous alkaline solution. The aqueous alkaline solution may include, for example, an aqueous sodium carbonate solution. Particularly, the washing may be conducted in an aqueous sodium carbonate solution for at about 20°C to 30°C for about 1 to 24 hours.

The reverse osmosis membrane manufactured in the above-described method in accordance with exemplary embodiments includes at least one compound containing graphene in the active layer, and illustrates better effects of salt rejection and permeation flux as comparing with a common reverse osmosis membrane.

### [Mode for Invention]

Hereinafter, exemplary embodiments will be described in more detail referring to particular examples.

### Example 1

18 wt% of polysulfone as a solid content was added to an N,N-dimethylformamide (DMF) solution and dissolved at 80°C for 12 hours or over to obtain a homogeneous liquid phase solution. This solution was cast to a thickness of 45 to 50 µm on a non-woven polyester fabric having a thickness of about 95 to 100 µm to manufacture a porous polysulfone support.

Into 92 mL of H₂SO₄ solution including 2g of NaNO₃ and 12g of KMnO₄ dissolved therein, 4g of graphite plate was added and stirred vigorously for 3 hours. Then, the thus obtained product was washed using 5 wt% of an aqueous H₂SO₄ solution, and then, put into 30 wt% of a hydrogen peroxide solution until the color of the product disappeared. The thus obtained graphene oxide dispersion was filtered by using filter paper, washed using purified water until the pH became 7, and dried at 60°C to obtain a graphene oxide powder.

The porous polysulfone support manufactured by the above-described method was dipped into an aqueous solution including 2 wt% of metaphenylenediamine and 0.0005 wt% of the graphene oxide powder obtained by the above-described method for 2 minutes and taken out. An excessive amount of an aqueous solution on the support was removed by using a 25 psi roller. Then, the support was dried at room temperature for 1 minute.

After that, the support was dipped into a 0.1 wt% trimesoyl chloride organic solution using ISOL-C (SK Chem) solvent for 1 minute, and dried in an oven at 60°C for 10 minutes. Then, the support was washed using 0.2 wt% of an aqueous sodium carbonate solution at room temperature for 2 hours or over, and washed using distilled water to manufacture a reverse osmosis separation membrane having an active layer having a thickness of smaller than or equal to 1 µm.

### Example 2

A reverse osmosis separation membrane was manufactured by conducting the same procedure described in Example 1 except for using 0.005 wt% of graphene oxide.

### Example 3

A reverse osmosis separation membrane was manufactured by conducting the same procedure described in Example 1 except for using 0.05 wt% of graphene oxide.

### Comparative Example

A reverse osmosis separation membrane was manufactured by conducting the same procedure described in Example 1 while excluding graphene oxide.

### Experiments

The initial salt rejection and the initial permeation flux of each of the reverse osmosis separation membranes according to Examples 1 to 3 and Comparative Example 1 were measured. The initial salt rejection and the initial permeation flux were measured by mounting the reverse osmosis separation membranes manufactured in Examples 1 to 3 and Comparative Example 1 in a reverse osmosis cell apparatus (Sepa CF II cell of GE Osmosis) including a flat type transmission cell, a high pressure pump, a storing bath and a cooling apparatus, and transmitting an aqueous sodium chloride solution of 32,000 ppm at 25°C with a flowing amount of 1,400 mL/min. The flat type transmission cell had a cross-flow type and had an effective transmission area of 140 cm². After mounting the reverse osmosis separation layer on the transmission cell, a preliminary operation was sufficiently conducted to stabilize the evaluation apparatus for about 1 hour using distilled water distilled three times. Then, the aqueous sodium chloride solution of 32,000 ppm was added to the apparatus, and the apparatus was operated for about 1 hour until pressure and permeability reached to a stationary state. Then, the amount of water transmitted for 10 minutes was measured to calculate the permeation flux. In addition, the concentration of salts before and after the transmission was measured by using a conductivity meter to calculate the salt rejection. The measured results are illustrated in following Table 1.

**Table 1**

| | Salt rejection (%) | Permeation flux (gallon/ft²·day) |
|---|---|---|
| Example 1 | 97.23 | 23.72 |
| Example 2 | 98.34 | 24.67 |
| Example 3 | 98.78 | 26.54 |
| Comparative Example | 96.76 | 19.82 |

## Claims

1. A reverse osmosis separation membrane, comprising:
a minute, porous support; and
a polyamide active layer formed on the minute, porous support and including at least one compound containing graphene.

2. The reverse osmosis separation membrane of claim 1, wherein the compound containing graphene is at least one among graphene and graphene oxide.

3. The reverse osmosis separation membrane of claim 1, wherein the minute, porous support is one selected from the group consisting of polysulfone, polyethersulfone, polycarbonate, polyethylene oxide, polyimide, polyetherimide, polyether ether ketone, polypropylene, polymethylpentene, polymethyl chloride and polyvinylidene fluoride.

4. The reverse osmosis separation membrane of claim 1, wherein the polyamide active layer is formed by interfacial polymerization of an amine compound and an acyl halide compound.

5. The reverse osmosis separation membrane of claim 4, wherein the amine compound is one of m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine and mixtures thereof.

6. The reverse osmosis separation membrane of claim 4, wherein the acyl halide compound is at least one selected from the group consisting of trimesoyl chloride, isophthaloyl chloride and terephthaloyl chloride.

7. A method of manufacturing a reverse osmosis separation membrane comprising:
coating a minute, porous support with an aqueous amine solution including at least one compound containing graphene;
removing an excessive amount of the aqueous amine solution on the support; and
contacting an aliphatic hydrocarbon organic solution including an acyl halide with the minute, porous support coated with the aqueous amine solution.

8. The method of manufacturing a reverse osmosis separation membrane of claim 7, wherein the compound containing graphene is selected from graphene and graphene oxide.

9. The method of manufacturing a reverse osmosis separation membrane of claim 7, wherein the compound containing graphene is included in an amount of 0.0005 to 0.05 wt% based on a total amount of the aqueous amine solution.

10. The method of manufacturing a reverse osmosis separation membrane of claim 7, wherein the minute, porous support is one selected from the group consisting of polysulfone, polyethersulfone, polycarbonate, polyethylene oxide, polyimide, polyetherimide, polyether ether ketone, polypropylene, polymethylpentene, polymethyl chloride and polyvinylidene fluoride.

11. The method of manufacturing a reverse osmosis separation membrane of claim 7, wherein the aqueous amine solution includes at least one of m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine and mixtures thereof.

12. The method of manufacturing a reverse osmosis separation membrane of claim 7, wherein the aliphatic hydrocarbon organic solvent including the acyl halide is at least one selected from the group consisting of trimesoyl chloride, isophthaloyl chloride and terephthaloyl chloride.
